# EUROPEAN PATENT APPLICATION

(11) **EP 4 095 191 A1**
(43) Date of publication of application: **30.11.2022**
(21) Application number: 21176337.0
(22) Date of filing: 27.05.2021
(51) Int. Cl.: C08L 1/02, C08L 5/08, C09D 101/02, C09D 105/08

(54) **PREPARATION PROCEDURE OF OGR PRODUCT TO BE APPLIED IN COATING ON CELLULOSE PRODUCTS**

(71) Applicant: FTT S.r.l., 37124 Verona VR (IT)
(72) Inventor: Piccolo, Diego, 36040 Sarmego VI (IT); Melisi, Domenico, 37012 Bussolengo VR (IT)
(74) Representative: Di Giovine, Paolo

(57) **Abstract**

The present invention relates to a new process for the preparation of OGR products, in particular of a water dispersion comprising chitosan and microfibrillated cellulose, used for coating supports, in particular cellulose supports or fabric with the purpose of returning to the support itself resistance properties or higher resistance with respect to permeation of oils and fatty substances. Such property is requested for example to the packaging of food products starting from cellulose pulp, or even to fabric of various nature which could be exposed to fatty substances and oils. The described preparation method guarantees rheological properties so as to allow the application of the product on geometrically complex surfaces by means of spray coating methods.

## Description

### FIELD OF THE INVENTION

The present invention relates to a new process for the preparation of OGR products, in particular of a water dispersion comprising chitosan and microfibrillated cellulose, used for coating supports, in particular supports made of cellulose or fabric with the purpose of returning to the support itself resistance properties or higher resistance with respect to permeation of oils and fatty substances. Such property is requested for example to the packaging of food products from cellulose pulp, or even to fabric of various nature which could be exposed to fatty substances and oils.

### STATE OF ART

The Oil Grease Resistant (OGR) treatment involves the fields wherein such feature is required, first of all fabric and paper.

The methods usually used in the paper processing, capable of guaranteeing a certain degree of resistance to permeability to oils and grease are substantially two: dosages of mass products (or wet-end products), that is products mixed directly in the mix, and surface application on the already formed and dried supports.

The fact of dosing mass products represents the most easily implementable solution since it requires small integrations to be implemented on a system for preparation already existing mixes. Up to now almost all commercially available products capable of guaranteeing good yields of permeability to oils and grease includes more or less long fluorinated molecules, known as PFAS (Per- and Polyfluoroalkyl substances). Due to the evidence of biopersistence of such molecules, with negative consequences both in nature and in man, since 2020 Europe prohibited the use of such molecules for lengths equal or higher than 8 atoms of carbon. At the same time, doubts arose even for molecules with shorter length, reason why in 2021 the main producers of PFAS announced the intention of eliminating such products from commerce in the subsequent three years.

The commercially available mass dosed solutions, alternative to the use of PFAS, have strong problems of performances for temperatures even only slightly higher than room environment.

These considerations have moved the attention on products impermeable to grease applicable in surface (glued, impregnated or coated papers).

Waxes, paraffins, silicones and plastics (many commercial products for example are acrylic based) are all solutions characterized by problems of recyclability and compostability. Pullulan and alginates have poor resistance to humidity. Bioplastics based upon starch and PLA highlight not a few technological critical issues in application and functional performances. Starch gelatinous solutions return films usually characterized of by extreme fragility and poor barrier properties. Surface applications of sol-gel which vitrifies by forming an inert layer often shows problems of biodegradability, requirement necessary to guarantee the compostability of a product. Moreover, the sol-gels have the strong limitation to be often dispersed in an alcoholic phase, which makes more complex the management of the product itself.

With the purpose of maintaining biodegradability and imparting the features of resistance to oils and grease, chitosan was studied. Chitosan structure is similar to that of cellulose, with the difference that at carbon-2 the cellulose hydroxyl group is replaced by an amine group. The interaction between the amine group and grease and lipids with negative charge can improve the resistance to oil. Chitosan reaction with emulsions of lipids generates a soluble ionic structure which interferes with the absorption of lipids in lumen of cellulose fibres (Zhu Long et al. Preparation and oil resistant mechanism of Chitosan cationic starch oil proof paper).

The films obtained from the application in surface of aqueous solutions of chitosan highlighted poor mechanical properties. In order to improve this aspect, in some works nano-fibrillated celluloses (NFC) were mixed to the chitosan solution, thus originating a stable nanocomposite dispersion. Same phenomenon was observed even in case of other biopolymers.

Supports made of fabric or cellulose treated in surface with mixtures of MFC/chitosan showed optimum OGR performances, apart from gas and aroma, while maintaining the typical biodegradability of the starting materials. The resulting composite films usually show good mechanical features and poor fragility. Moreover, the absence of solvents allows a simpler management of the product. One of the known problems of this type of film is its absorption in water. In some works, the effects on the final coating performances, of the dosage of microfibrillated cellulose (MFC) in solutions of chitosan are described. The resulting composite material then consists of a network of MFC in the chitosan matrix which will result to be interconnected to the MFC cellulose fibres through the carbonyl groups. Apart from a substantial increase in the tensile strength, the strong decrease in the swelling phenomenon, then the improvement in the size stability in humid environment of the resulting films, is very interesting (Jitendra K. Pandey et al. Handbook of Polymer Nanocomposites. Processing, Performance and Application: Volume C: Polymer Nanocomposites of Cellulose Nanoparticles, Springer, 1 December 2014).

The particular interest in food packaging made of cellulose pulp makes necessary the evaluation of specific application technologies for objects having concave surfaces to be treated with three-dimensional extension. This constraint led the study performed by the authors towards spray applicative technologies. The latter impose kinematic viscosity ranges which one has to follow and the performed tests led to determine exactly the dosages to be used of the two main components with the purpose of optimizing the performances of repellence to oil and water, even if within the range of kinematic viscosity required by the applicative technology.

### SUMMARY OF THE INVENTION

The technical problem placed and solved by the present invention, is to provide an aqueous dispersion comprising chitosan and microfibrillated cellulose, which applied on supports such as paper and fabric, generally subjected to the permeation of oils and grease, allows to obtain a film capable of guaranteeing a good resistance to the permeation of oils and grease and at the same time to maintain good mechanical resistance and water absorption without losing the biodegradability feature. The fundamental requirement of the detected composition is that of being in a kinematic viscosity range so as to be able to be applied in surface through spray coating techniques.

Such problem is solved by means of a method for preparing a water dispersion comprising chitosan and microfibrillated cellulose, comprising a mixing step of chitosan and microfibrillated cellulose in water, characterized in that the ratio of the chitosan concentration to the microfibrillated cellulose concentration in the mixture is comprised between 4:1 and 2:1, preferably 3:1, in particular the sum of the concentrations by weight of chitosan and microfibrillated cellulose is in a range between 1.3% by weight and 1.7% by weight. The authors of the present invention surprisingly found that the method of the present invention allows to obtain an aqueous dispersion having kinematic viscosity values comprised between 60s and 100s Ford cup 4, optimum for the dispersion application on supports of cellulose nature or on fabric, by exploiting for example spray coating technologies. Since it is a process to be performed subsequently with respect to the production by thermoforming of the packaging made of cellulose pulp, it will be possible to apply the treatment indistinctly to objects consisting of mixes and different cellulose raw materials, without interfering in any way with the production of the packaging itself.

Hence, object of the invention is an aqueous dispersion which can be obtained by the herein described method, having kinematic viscosity values comprised between 60s and 100s Ford cup 4 in order to be able to apply the solution on supports of cellulose nature or on fabric, by exploiting spray coating technologies.

Further object of the present invention is a method for the preparation of a manufactured product coated with a film of the dispersion described in the present description comprising the following steps:
i) applying the dispersion on the surface of said support;
ii) drying the applied dispersion.

Finally, object of the present invention is a manufactured product which can be obtained by the above-mentioned method, wherein the coating film imparts to said manufactured product values of resistance to permeation of oils and grease obtained by means of the KIT Test T559 higher than 12 and it maintains the biodegradability thereof.

### GLOSSARY

The meanings of acronyms used in the present description are herein explained.
AKD: Alkyl Ketene Dimer
OGR: Oil Grease Resistance
MFC: MicroFibrillated Cellulose
DDA: Degree of De-Acetylation
DD: Degree of De-Acetylation
NFC: NanoFibrilled Cellulose
PFAS: Per- and Polyfluoroalkyl Substances
PLA: PolyLactic Acid
°SR: Schopper Riegler degrees, value designating freeness of a cellulose mix, directly correlated to the refining level of the mix itself.
Ford cup: instruments to test the viscosity of the low-viscosity liquids such as varnishes, lacquers and paints. It is possible to determine therewith the viscosity by means of the flow, according to the DIN 53211 - ASTM D1200 standards. The numeral value shown in the wording "Ford cup 4" designates the value in mm of the diameter of the passage hole of the fluid to be analysed.
KIT TEST 559: method to test the degree of repellence and/or the antiperspirant features of paper and cardboard. This test was developed by TAPPI (Technical Association of the Pulp and Paper Industry) to monitor the effect of fluorine-based additives, substances which modify wettability both to water and to oil of the products made of cellulose. Numbered solutions are used, with different surface tension and viscosity (aggressivity), wherein those having higher numbers represent the most aggressive ones. The most aggressive solution which remains on the sheet surface without causing damages is designated as 'kit rating'.
Purity degree: percentage ratio between the mass of a given substance and the total mass of the sample.

In the present description, "about" relates to the experimental error which can occur during conventional measurements. More in particular when it relates to a value, it designates a maximum of ± 10% with respect to a numeral value or to the numeral values thereto it refers.

### DETAILED DESCRIPTION

The present invention relates to a method for preparing an aqueous composition comprising chitosan and microfibrillated cellulose, comprising a mixing step of chitosan and microfibrillated cellulose in water, wherein the ratio of the chitosan concentration and the microfibrillated cellulose concentration is in a range comprised between 4:1 and 2:1, preferably 3:1, in particular the sum of the concentrations by weight of chitosan and microfibrillated cellulose is in a range between 1.3% by weight and 1.7% by weight.
Such ratio of concentrations allows to obtain an aqueous dispersion having kinematic viscosity values comprised between 60s and 100s Ford cup 4 being within the technologically valid limits to be able to apply the solution on supports of cellulose nature or on fabric, by exploiting spray coating technologies. Since it is a process to be carried out subsequently with respect to the production by thermoforming of the packaging made of cellulose pulp, it will be possible to apply the treatment indistinctly to objects consisting of mixes and different cellulose raw materials, without interfering in any way with the production of the packaging itself.

In an embodiment, said chitosan is a cationic chitosan with a degree of deacetylation in a range between 70% and 90% and/or a molecular weight in a range between 300 and 350 kDa, preferably 320 kDa.
Chitosan is a polysaccharide, abundant in nature, derived from chitin, a substance present in the exoskeleton of crustacea and insects, as well as the second biopolymer most abundant in nature after cellulose. Chitosan is usually obtained through N-deacetylation of chitin found in crustacea, and it is a copolymer of D-glucosamine and N-acetyl-D-glucosamine. The degree of deacetylation (DDA or DD) shown by chitosan (molar fraction of N-acetyl-D-glucosamine) can be controlled during a process of relatively aggressive alkaline hydrolysis applied to chitin, through a combination of duration of exposure and temperature. Chitosan is obtained from the removal of a sufficient number of acetyl groups (CH3-CO) with the purpose of guaranteeing to the molecule to be soluble in many diluted acids. This process, called deacetylation, releases amine groups (NH) and returns to chitosan cationic feature. In particular the nomenclature provides that one speaks about chitosan when there are degrees of deacetylation comprised between 70% and 90%. Whereas chitin is a linear polysaccharide consisting of one single unit of monomeric sugar, properly called acetylated glucosamine, chitosans are linear co-polymers of acetylated and not acetylated residues. This partial deacetylation produces free amine groups which at slightly acid pH values induce positive charge to chitosan by making it the only polycationic polysaccharide. It is important to underline the possibility that some properties of chitosan can slightly change from a batch to the other one due to the natural origin of the raw material. Chitosan is not soluble in water, but it becomes soluble in diluted acids when the degree of deacetylation overcomes 50%. In some cases, in order to favour solubility in water, chitosan is depolymerized to create chitosans with low molecular weights. The chitosan structure is similar to that of cellulose, with the difference that at carbon-2 the hydroxyl group of cellulose is replaced by an amine group. The interaction between the amine group and grease and lipids with negative charge can improve the resistance to oil. The reaction of chitosan with emulsions of lipids generates a soluble ionic structure which interferes with the absorption of the lipids in lumen of cellulose fibres. The use of cationic chitosan with a molecular weight in a range between 300 and 350 kDa, is functional to OGR performances, whereas the degree of deacetylation in a range between 70% and 90% makes the molecule soluble in acid aqueous solution.

In an embodiment, said microfibrillated cellulose has a surface area in a range between 220 and 280 m²/g, preferably 250 m²/g.
By using microfibrillated cellulose a composite material consisting of a network of MFC in a matrix of chitosan is obtained, which will result to be interconnected to the cellulose fibres of MFC through the carbonylic groups, by providing to the film derived from the application of such product a substantial increase in the tensile strength, as well as a strong decrease in the water swelling phenomenon thereto chitosan is subjected. The high surface/volume ratio of MFC selected for performing the described method, increases very much the number of chitosan/MFC interactions by maximizing the anti-swelling effect of MFC.

In a preferred embodiment, according to any one of the embodiments discussed in the present invention, the chitosan concentration is in a range by weight between 1.00 and 1.20%, preferably 1.14%, and the microfibrillated cellulose concentration is in a range by weight between 0.30 and 0.50%, preferably 0.38 %.

According to an embodiment, the method for preparing the aqueous dispersion comprises the following steps:
i) addition of chitosan powder in water heated in a range between 60 and 80°C, preferably 70°C and stirring for at least two hours,
ii) addition of acetic acid upon reaching a pH below 6, preferably 4 and stirring for at least six hours,
iii) addition of microfibrillated cellulose and stirring for at least two hours.
Between the step ii) and iii), or subsequently the step iii) optionally a step of adding water can be performed to compensate the evaporated liquid phase.
The timing suggested for each step are so as to guarantee an optimum mixing of the components. Longer time would lead to a darker colouring of chitosan in solution, unwished feature. In all steps for preparing the product, the fact of adjusting suitably the mixing stirring results to have a fundamental importance, so that air is not incorporated in the final product which, considering the high viscosity, risks to keep it under form of bubbles.
Moreover, the absence of solvents reduces very much the problems associated to the risk of inhaling the product in the application phase, and wholly eliminates the risk associated to the management of inflammable substances or which can generate explosions.

According to an embodiment, said acetic acid is glacial acetic acid, with purity degree higher than 95%, preferably 99.7%.
It is fundamental to highlight that in the just described preparation procedure the calculations of the weights performed with the purpose of complying with the requested dosages neglect the supply by weight of acetic acid. This because the exact amount of requested acid to reach the value of pH 4 cannot be foreseen in advance since it depends upon the features of the used water, but above all upon the features of the used chitosan which, as it has natural origin, could vary slightly from batch to batch.
The addition of acetic acid results to be necessary to carry out the method due to the not solubility of chitosan in water. In fact, chitosan is not naturally soluble in water, but it becomes so when diluted in an acid solution with pH lower than 6.

In an embodiment, the production process is performed by means of using stirring vats, preferably at variable speed. The vats have to allow to keep the required temperature in the range between 60 and 80°C and the possibility of inspecting the requested acidity value lower than 4, with suitable pH-metre.

Therefore, the present invention further relates to an aqueous dispersion having kinematic viscosity values comprised between 60s and 100s Ford cup 4, comprising chitosan and microfibrillated cellulose, which can be obtained with the method according to any one of the herein described embodiments.

In a particularly preferred embodiment of the aqueous dispersion described by any one of the herein discussed embodiments, said chitosan is a cationic chitosan with a degree of deacetylation in a range between 70% and 90% and molecular weight of 320 kDa present in a concentration equal to 1.14%, and said microfibrillated cellulose has a surface area of 250 m²/g and it is present in a concentration equal to 0.38%.

The percentages in the present description are defined as percentages by weight, that is the grams of substances per 100 grams of solution.

The present description further relates to a method for preparing a manufactured product coated with a film comprising the following steps:
i) applying the dispersion according to any one of the embodiments discussed in the present description, on the surface of said manufactured product;
ii) drying the applied dispersion.

The method can include a step preceding the step i), wherein the product can be diluted with water based upon the applicator's needs.

Subsequently to the step ii), the method can include a step iii) of evaluating resistance to penetration of oil and grease, continuity of dry film obtained by means of technological tests performed by means of the techniques known by a person skilled in the art.
In case such verifications do not fulfil the wished features of the obtained film, subsequently to the step iii) the steps i) and ii) of the above-described method could performed again.
Since it is a water-based product, the formation of the continuous film is helped by the presence of gluing agents such as alkyl ketene dimer (AKD) in the manufactured product of cellulose nature.

In an embodiment, said step i) of applying the dispersion on the surface of the manufactured product is carried out by means of a technique chosen from the following list: application by brush, immersion, draw-down coater, size press, curtain coating, film press, spin coating, spray coating. The person skilled in the art knows the type of technique to be used for applying the dispersion. The selection of the application methods relates to the geometry and extension of the manufactured product itself, and function of technological considerations to be evaluates case by case. It is believed that some among the surface application technologies compatible with the dispersion, the invention relates to, are application by brush, immersion, for planar surfaces to be coated continuously the common techniques known in the paper field can be considered, such as draw-down coater, size press, curtain coating and film press, for small laboratory applications the spin coating technique is possible, whereas for all conceivable geometries and extensions the spray coating technology is possible. It is particularly important to put the attention on the fact that the dispersion, the invention relates to, prepared by means of the above-described preparation method, has kinematic viscosity values so as to be able to perform the step i) for applying the dispersion on the surface of manufactured product by means of the spray coating technique, feature not possessed by dispersions and compositions comprising chitosan and microfibrillated cellulose known in the art. The enormous advantage obtained by this feature is that the spray coating can be performed on manufacts of each type of geometry and extensions, allowing a quick and uniform application.

In an embodiment, said step ii) of drying the applied dispersion is performed by means of infrared tunnel or hot air at a temperature in a range between 70°C and 150°C.

According to an embodiment, said manufactured product is a manufactured product of cellulose nature having as origin fibres with different nature used singularly or in mix therebetween, such as long, short, whitened, or not whitened fibres, fibres extracted from wood through all commonly known methods, such as for example mechanical, thermal and chemical processes or the junction thereof, fibres which can be used as such or after suitable refining process, or a fabric produced starting from fibres of vegetable, animal or artificial origin.

According to an embodiment, the amount of dispersion described according to any one of the embodiments of the present invention, applied on the surface of the manufactured product, is such as to impart properties of resistance to permeation of oils and grease, resistance to water and at the same time to maintain biodegradability.
The amount of dry final product to be applied in surface with the purpose of guaranteeing the formation of a continuous film strongly depends upon the nature of the substrate where it will be deposited, and in particular upon the presence or not of porosity. Refined supports at values higher than 30°SR and obtained through thermoforming processes capable of guaranteeing an optimum closing, are treated successfully starting from a minimum of 6 g/m² of dry, by using the defined dispersion according to any one of the herein described embodiments.

Finally, object of the present invention is a manufactured product coated with a film of the dispersion described in the present invention, which can be obtained through the herein described and claimed method.

According to an embodiment, said manufactured product is a manufactured product of cellulose nature having as origin fibres of different nature used singularly or in mix therebetween, such as long, short, whitened or not whitened fibres, extracted from wood through all commonly known methods, such as for example mechanical, thermal and chemical processes or the junction thereof, fibres which can be used as such or after suitable refining process, or a fabric produced starting from fibres of vegetable, animal or artificial origin having characteristics of biodegradability, high mechanical resistance, high resistance to water absorption and values of resistance to permeation of oils and grease obtained by means of the KIT Test T559 higher than 12.

In an embodiment of the present invention, the manufactured product is coated with a film of the dispersion, the invention relates to, on the whole surface or on a section of its surface or on at least 70%, 80%, 90% of the surface. Not limiting examples can be a sheet of paper intended to use as casing for food, coated with a film of the dispersion on the surface intended to the contact with food, or a product made of cellulose pulp thermoformed so as to have the shape of a dish, a bowl, a tray.

### EXAM PLES

In the following description 2000g of dispersion for coating were prepared.

The solubilization water was preheated at 76°C (ex. 2000g of water in microwaves at 950W for 11 minutes). Subsequently the becher with 1724.2g of preheated water was placed on a small laboratory oven set at about 100°C to guarantee to maintain a minimum temperature during the subsequent phases of dosage and solubilization of chitosan. 22.8 g of powder of Chitosan were weighed and mixed to the water for 2 hours by using a laboratory propeller mixer. Subsequently glacial acetic acid (99.7%) was dosed until reaching a value of pH of about 4, at the same time by monitoring the solution temperature. The measurements of pH and temperature of the solution were performed with suitable immersion meters. The whole was kept stirring for 6 hours. Then hot water was added until reaching a weight of 1747g and then 253g of commercial dough of 3% MFC by weight were dosed, then for a dry value of 7.6g of microfibrillated celluloses. The so-obtained dispersion is stirred for further 2 hours. At the end of the 2 hours an amount of hot water was poured so as to reach a weight of the final dispersion of 2000g.

Biodegradability: tests were not performed to validate biodegradability of the supports treated on the surface with the dispersion, the invention relates to, since the invention relates to a mix obtained from evidently biodegradable raw materials, therefore it is biodegradable too.

OGR: all tests performed by means of KIT Test T559 detect values higher than 12.

Resistance to water: when one speaks about resistance to the water absorption, one makes reference to the decrease in the swelling mechanism of the applied coating and consequently to the evident improvement in the property of the film itself of not weakening under the effect of water absorption. This improvement is due to the presence of the MFC reinforcement structure.

## Claims

1. A method for the preparation of a water dispersion comprising chitosan and microfibrillated cellulose, comprising a mixing step of chitosan and microfibrillated cellulose in water, wherein the ratio of the chitosan concentration to the microfibrillated cellulose concentration in the mixture is in the range from 4:1 and 2:1, preferably 3:1, in particular the sum of the concentrations by weight of chitosan and microfibrillated cellulose is in a range between 1.3% by weight and 1.7% by weight.

2. The method according to claim 1, wherein said chitosan is a cationic chitosan with a degree of deacetylation in a range between 70% and 90% and/or a molecular weight in a range between 300 and 350 kDa, preferably 320 kDa.

3. The method according to claim 1 or 2, wherein said microfibrillated cellulose has a surface area in a range between 220 and 280 m²/g, preferably 250 m²/g.

4. The method according to any one of claims 1 to 3, wherein the chitosan concentration is in a range between 1.00 and 1.20%, preferably 1.14%, and the microfibrillated cellulose concentration is in a range between 0.30 and 0.50 %, preferably 0.38 %.

5. The method according to any one of claims 1 to 4, comprising the following steps:
i) addition of chitosan powder in water heated in a range between 60 and 80°C, preferably 70°C and stirring for at least two hours,
ii) addition of acetic acid upon reaching a pH below 6, preferably 4 and stirring for at least six hours,
iii) addition of microfibrillated cellulose and stirring for at least two hours.

6. The method according to claim 5, wherein said acetic acid is glacial acetic acid, with a degree of purity greater than 95%, preferably 99.7%.

7. An aqueous dispersion having viscosity values in a range between 60s and 100s Ford cup 4, comprising chitosan and microfibrillated cellulose, obtainable with the method according to any of claims 1 to 6.

8. The aqueous dispersion according to claim 7, wherein said chitosan is a cationic chitosan with a degree of deacetylation in a range between 70% and 90% and molecular weight of 320 kDa present in a concentration equal to 1.14 wt%; wherein said microfibrillated cellulose has a surface area of 250 m²/g and it is present in a concentration of 0.38%.

9. A method for the preparation of a manufactured product coated by a film comprising the following steps:
i) applying the dispersion according to claim 7 or 8 on the surface of said manufactured product;
ii) drying the applied dispersion.

10. The method according to claim 9, wherein said application on the surface of the manufactured product is carried out by means of a technique chosen from the following list: application by brush, immersion, draw-down coater, size press, curtain coating, film press, spin coating, spray coating.

11. The method according to any one of claims 9 to 10, wherein said dry up is carried out by means of infrared tunnel or hot air at a temperature in a range between 70°C and 150°C.

12. The method according to any one of claims 9 to 11, wherein said manufactured product is a cellulose manufactured product or a fabric.

13. The method according to any one of claims 9 to 12, wherein the amount of said dispersion to be applied on the surface of the manufactured product is such as to impart properties of resistance to the permeation of oils and grease and to maintain the biodegradability of said manufactured product.

14. The coated manufactured product obtainable by the method according to any one of claims 9 to 13.

15. The manufactured product according to claim 14 having characteristics of biodegradability, high resistance to water absorption, and permeation resistance of oils and grease values obtained by means of the KIT Test T559 resulting greater than 12.
